# EUROPEAN PATENT SPECIFICATION

(11) **EP 3 663 891 B1**
(45) Date of publication and mention of the grant of the patent: **31.01.2024**
(21) Application number: 19213608.3
(22) Date of filing: 04.12.2019
(51) Int. Cl.: G06F 1/16, H04M 1/02, B32B 7/14

(54) **ELECTRONIC DEVICE INCLUDING ADHESIVE STRUCTURE**
ELEKTRONISCHE VORRICHTUNG MIT HAFTSTRUKTUR
DISPOSITIF ÉLECTRONIQUE COMPRENANT UNE STRUCTURE ADHÉSIVE

(30) Priority: 07.12.2018 KR 20180157553
(43) Date of publication of application: 10.06.2020
(73) Proprietor: Samsung Electronics Co., Ltd., Suwon-si, Gyeonggi-do 16677 (KR)
(72) Inventor: Jang, Cheoleun, Suwon-si, Gyeonggi-do 16677 (KR); Park, Sinyoung, Suwon-si, Gyeonggi-do 16677 (KR); Baek, Sangin, Suwon-si, Gyeonggi-do 16677 (KR); Yoon, Doosun, Suwon-si, Gyeonggi-do 16677 (KR); Zhang, Hang, Suwon-si, Gyeonggi-do 16677 (KR)
(74) Representative: Nederlandsch Octrooibureau

(56) References cited:
- EP-A1- 3 109 847
- WO-A1-2017/112438

## Description

### BACKGROUND

### 1. Field

The disclosure relates to an electronic device including an adhesive structure. More particularly, the disclosure relates to an adhesive structure for coupling between a foldable housing and a display module of an electronic device.

### 2. Description of Related Art

Along with the remarkable development of information and communication technology and semiconductor technology, the proliferation and popularity of various electronic devices are increasing rapidly. In particular, recent electronic devices are under development that enable users to communicate while carrying them.

An electronic device refers to a device which executes a specific function according to a loaded program such as an electronic notebook, a portable multimedia player (PMP), a mobile communication terminal, a tablet personal computer (PC), a video/audio player, a desktop/laptop computer, a vehicle navigation system, and so on. For example, such electronic devices may output stored information as sound or an image. As the integration level of electronic devices increases and ultra-high speed and high-capacity wireless communication becomes popular, one electronic device such as a mobile communication terminal may be equipped with various functions in recent years. For example, not only a communication function, but also an entertainment function such as a game, a multimedia function such as music/video player, a communication and security function for mobile banking, schedule management or an electronic wallet, and so on are concentrated in one electronic device. These electronic devices are being miniaturized so that users carry them conveniently.

As the mobile communication service is extended to the multimedia service area, the size of a display in an electronic device may increase in order to enable a user to fully use the multimedia service as well as voice calls or short messages. Accordingly, a foldable display may be disposed over the entire area of a housing structure which is foldably divided.

EP 3 109 847 A1 discloses a foldable device includes first and second bodies that respectively support a first part and a second part of a flexible display and are foldably connected to each other between a folded position and an unfolded position, and a movable supporting member that continuously near-supports a third part of the flexible display between the first part and the second part when the first body and the second body change from the folded position to the unfolded position. WO 2017/112438 A1 discloses a flexible display using a bonding layer including a support layer and discrete adhesive patches disposed on one or both sides of the support layer.

The above information is presented as background information only to assist with an understanding of the disclosure. No determination has been made, and no assertion is made, as to whether any of the above might be applicable as prior art with regard to the disclosure

### SUMMARY

A foldable electronic device for including a plurality of housing structures which are rotatable with respect to each other. In general, the plurality of housing structures may be coupled to a display module by an adhesive structure such as a double-sided tape or bond in the electronic device.

The plurality of housing structures is vulnerable to distortion in view of rotation-caused relative movement or impact caused by an external force. For example, when an impact is applied to the electronic device due to fall, the housing structures may make a relative movement due to the gap between the housing structure or deformation of a component. When a shear behavior of the housing structures occurs due to an external force, the external force may be transferred to the display module through the adhesive structure, thereby causing damage to a light emitting layer. In another example, the external force may damage the adhesive force of the adhesive structure, thereby distorting the device itself or separating the housing structures from the display module.

Aspects of the disclosure are to address at least the above-mentioned problems and/or disadvantages and to provide at least the advantages described below. Accordingly, an aspect of the disclosure is to provide an adhesive structure arranged in a foldable electronic device for distributing stress caused by a relative movement of the electronic device and distribute the stress transferred to a flexible display module.

Another aspect of the disclosure is to provide an adhesive structure arranged in a foldable electronic device for distributing stress caused by a relative movement of the electronic device and maintain an adhesive force.

Additional aspects will be set forth in part in the description which follows and, in part, will be apparent from the description or may be learned by practice of the presented embodiments.

In accordance with an aspect of the disclosure, an electronic device is provided, according to claim 1.

Other aspects, advantages, and salient features of the disclosure will become apparent to those skilled in the art from the following detailed description, which, taken in conjunction with the annexed drawings, discloses various embodiments of the disclosure

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram of an electronic device in a network environment according to an embodiment and examples not including all the claimed features of the disclosure;
FIG. 2 is a diagram illustrating a flat state of an electronic device according to an embodiment and examples not including all the claimed features of the disclosure;
FIG. 3 is a diagram illustrating a folded state of an electronic device according to an embodiment and examples not including all the claimed features of the disclosure;
FIG. 4 is an exploded perspective view illustrating an electronic device according to an embodiment and examples not including all the claimed features of the disclosure;
FIG. 5 is a sectional view illustrating a side surface of an electronic device according to an embodiment of the disclosure;
FIGS. 6A, 6B, 6C, and 6D are diagrams illustrating various shapes of an adhesive structure according to examples not including all the claimed features of the disclosure;
FIG. 7 is a diagram illustrating directions in which relative movements of a foldable housing are made according to examples not including all the claimed features of the disclosure;
FIGS. 8A and 8B are diagrams illustrating directions in which relative movements of a foldable housing are made in a comparison between comparative embodiments and a configuration according to examples not including all the claimed features of the disclosure;
FIGS. 9A, 9B, 9C, and 9D are diagrams illustrating variations in stress applied to a display module and strain rates of an adhesive structure in a comparison between comparative embodiments and a configuration according to examples not including all the claimed features of the disclosure; and
FIGS. 10A and 10B are diagrams illustrating variations in stress applied to a partial area of display module in a comparison between comparative embodiments and a configuration according to examples not including all the claimed features of the disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

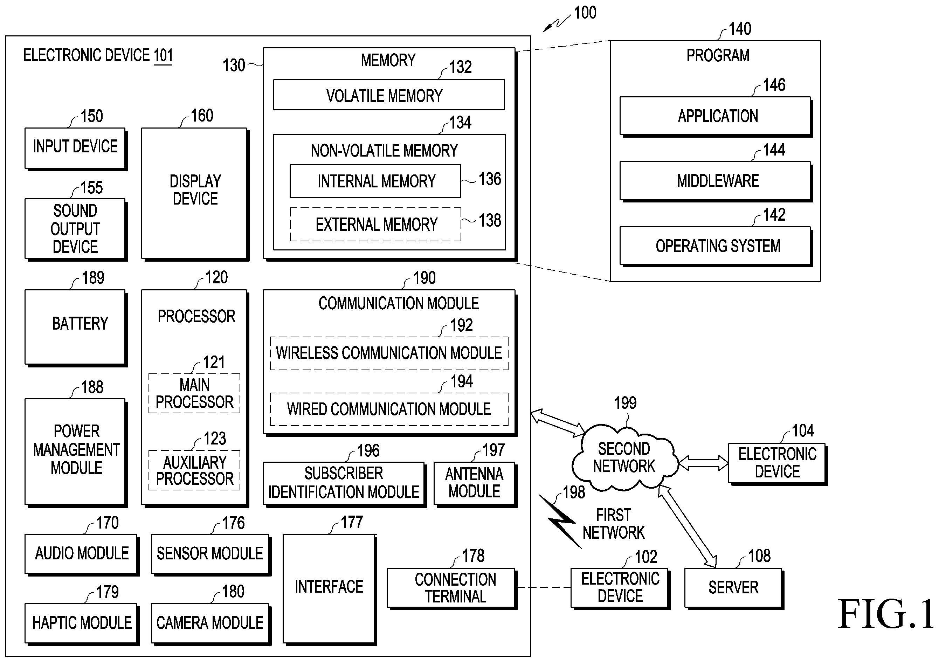

FIG. 1 is a block diagram illustrating an electronic device 101 in a network environment 100 according to various embodiments of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other components (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing recordings, and the receiver may be used for an incoming call. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, or projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector),

The haptic module 179 may convert an electrical signal into a mechanical stimulus (e.g., a vibration or a movement) or electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include one or more antennas, and, therefrom, at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

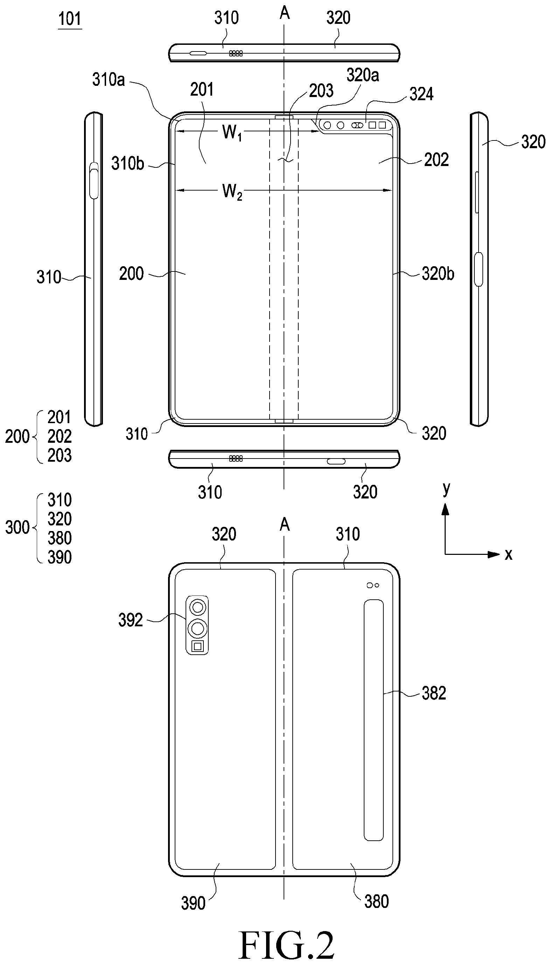

FIG. 2 is a diagram illustrating a flat state of an electronic device according to various embodiments of the disclosure of the disclosure.

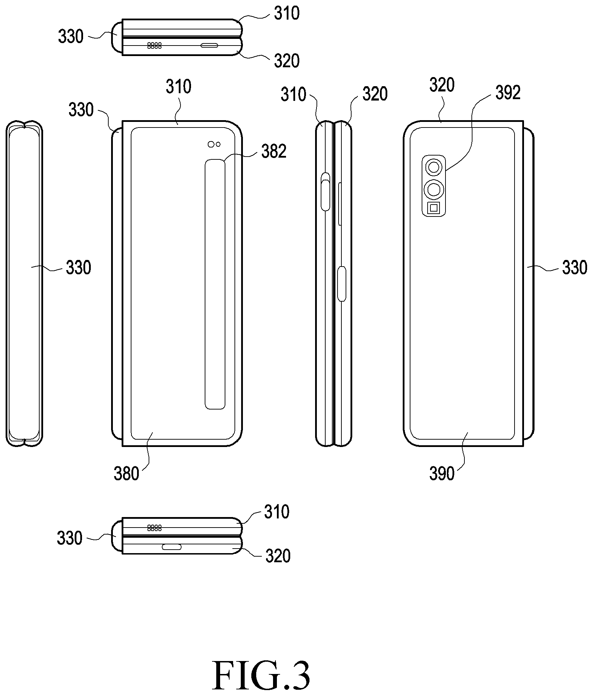

FIG. 3 is a diagram illustrating a folded state of an electronic device according to various embodiments of the disclosure of the disclosure.

Referring to FIGS. 2 and 3, in an embodiment of the disclosure, the electronic device 101 may include a foldable housing 300, a hinge cover (e.g., a hinge cover 330 in FIG. 3) covering a foldable portion of the foldable housing 300, and a flexible or foldable display 200 (hereinafter, "display" 200) (e.g., the display device 160 in FIG. 1) disposed in a space defined by the foldable housing 300. According to an embodiment of the disclosure, the surface on which the display 200 is disposed is defined as the front surface of the electronic device 101. The opposite surface to the front surface is defined as the rear surface of the electronic device 101. Further, a surface surrounding the space between the front and rear surfaces is defined as the side surface of the electronic device 101.

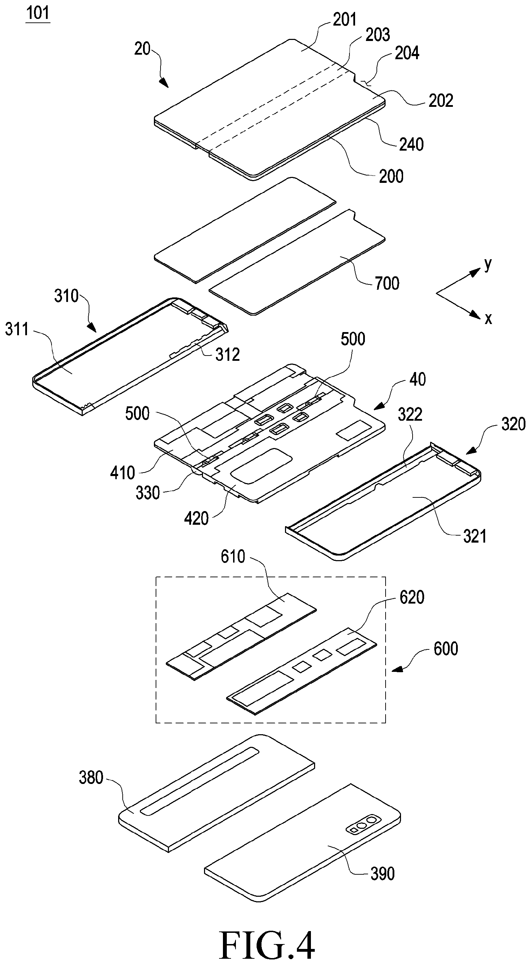

According to various embodiments of the disclosure, the foldable housing 300 may include a first housing structure 310, a second housing structure 320 including a sensor area 324, a first rear cover 380, a second rear cover 390, and a hinge structure (e.g., a hinge structure 500 in FIG. 4). The foldable housing 300 of the electronic device 101 is not limited to the shape and coupling illustrated in FIGS. 2 and 3, but may be implemented in a different shape or a different combination and/coupling of components. In another embodiment of the disclosure, for example, the first housing structure 310 and the first rear cover 380 may be integrally formed, and the second housing structure 320 and the second rear cover 390 may be integrally formed.

According to various embodiments of the disclosure, the first housing structure 310 may be connected to the hinge structure 500 and include a first surface facing in a first direction and a second surface facing in a second direction opposite to the first direction. The second housing structure 320 may be connected to the hinge structure 500, include a third surface facing in a third direction and a fourth surface facing in a fourth direction opposite to the third direction and rotate on the hinge structure 500 with respect to the first housing structure 310. Accordingly, the electronic device 101 may switch between a folded state and a flat state. With the electronic device 101 in the folded state, the first surface may face the third surface, whereas with the electronic device 101 in the flat state, the third direction may be the same as the first direction.

According to various embodiments of the disclosure, the first housing structure 310 and the second housing structure 320 may be disposed at both sides of a folding axis A, and generally symmetric with respect to the folding axis A. As described later, the angle or distance between the first housing structure 310 and the second housing structure 320 may vary depending on whether the electronic device 101 is in the unfolded state, the folded state, or an intermediate state. According to one embodiment of the disclosure, although unlike the first housing structure 310, the second housing structure 320 further includes the sensor area 324 in which various sensors are arranged, the second housing structure 320 may be symmetrical in shape in the other area.

According to various embodiments of the disclosure, as illustrated in FIG. 2, the first housing structure 310 and the second housing structure 320 may together form a recess for accommodating the display 200. According to an embodiment of the disclosure, due to the sensor area 324, the recess may have two or more different widths in a direction perpendicular to the folding axis A.

According to an embodiment of the disclosure, the recess may have a first width w1 between a first portion 310a of the first housing structure 310, parallel to the folding axis A and a first portion 320a formed at an edge of the sensor area 324 of the second housing structure 320. The recess may have a second width w2 between a second portion 310b of the first housing structure 310 and a second portion 320b of the second housing structure 320, which does not correspond to the sensor area 325 and is parallel to the folding axis A. In this case, the second width w2 may be longer than the first width w1 . In another example, the first portion 310a of the first housing structure 310 and the first portion 320a of the second housing structure 320 which are asymmetrical in shape may define the first width w1 of the recess, and the second portion 310b of the first housing structure 310 and a second portion 320b of the second housing structure 320 which are symmetrical in shape may define the second width w2 of the recess. According to one embodiment of the disclosure, the first portion 320a and the second portion 320b of the second housing structure 320 may have different distances from the folding axis A. The width of the recess is not limited to the illustrated example. In another embodiment of the disclosure, the recess may have a plurality of widths according to the shape of the sensor area 324 or the portions of the first housing structure 310 and the second housing structure 320, which are mutually asymmetrical in shape.

According to various embodiments of the disclosure, at least a part of the first housing structure 310 and the second housing structure 320 may be formed of a metal or non-metal material having a selected rigidity value to support the display 200. The at least part formed of the metal material may provide a ground plane for the electronic device 101 and may be electrically coupled to a ground line formed on a printed circuit board (PCB) (e.g., a PCB 600 in FIG. 4).

According to various embodiments of the disclosure, the sensor area 324 may be formed to occupy an area in the vicinity of one corner of the second housing structure 320. However, the arrangement, shape, and size of the sensor area 324 are not limited to the illustrated example. For example, in other embodiments of the disclosure, the sensor area 324 may be provided at another corner of the second housing structure 320 or in any area between top and bottom corners of the second housing structure 320. In an embodiment of the disclosure, components for executing various functions embedded in the electronic device 101 may be exposed from the front surface of the electronic device 101 through the sensor area 324 or through one or more openings provided in the sensor area 324. In various embodiments of the disclosure, the components may include various types of sensors. The sensors may include, for example, at least one of a front camera, a receiver, or a proximity sensor.

According to various embodiments of the disclosure, the first rear cover 380 may be disposed at one side of the folding axis on the rear surface of the electronic device 101, may have, for example, a substantially rectangular periphery, and may be surrounded along the periphery thereof by the first housing structure 310. Similarly, the second rear cover 390 may be disposed at the other side of the folding axis on the rear surface of the electronic device 101 and surrounded along the periphery thereof by the second housing structure 320.

According to various embodiments of the disclosure, the first rear cover 380 and the second rear cover 390 may be substantially symmetrical in shape with respect to the folding axis A. However, the first rear cover 380 and the second rear cover 390 are not necessarily symmetrical with each other. In another embodiment of the disclosure, the electronic device 101 may include the first rear cover 380 and the second rear cover 390 in various shapes. In another embodiment of the disclosure, the first rear cover 380 may be integrally formed with the first housing structure 310, and the second rear cover 390 may be integrally formed with the second housing structure 320.

According to various embodiments of the disclosure, the first rear cover 380, the second rear cover 390, the first housing structure 310, and the second housing structure 320 may define a space in which various components (e.g., a PCB or a battery) of the electronic device 101 may be arranged. According to an embodiment of the disclosure, one or more components may be disposed or visually exposed on the rear surface of the electronic device 101. For example, at least a part of a sub-display may be visually exposed through a first rear area 382 of the first rear cover 380. In another embodiment of the disclosure, one or more components or sensors may be visually exposed through a second rear area region 392 of the second rear cover 390. In various embodiments of the disclosure, the sensors may include a proximity sensor and/or a rear camera.

According to various embodiments of the disclosure, the front camera exposed from the front surface of the electronic device 101 through one or more openings provided in the sensor area 324 or the rear camera exposed through the second rear area 392 of the second rear cover 390 may include one or more lenses, an image sensor, and/or an image signal processor. A flash 313 may include, for example, a light emitting diode or a xenon lamp. In some embodiments of the disclosure, two or more lenses (an infrared camera and wide angle and telephoto lenses) and image sensors may be arranged on one surface of the electronic device 101.

Referring to FIG. 3, the hinge cover 330 may be disposed between the first housing structure 310 and the second housing structure 320 to cover internal components (e.g., the hinge structure 500 in FIG. 4). According to an embodiment of the disclosure, the hinge cover 330 may be covered or exposed outward by the first housing structure 310 and the second housing structure 320 according to a state (flat state or folded state) of the electronic device 101.

According to an embodiment, as illustrated in FIG. 2, when the electronic device 101 is in the flat state, the hinge cover 330 may be hidden by the first and second housing structures 301 and 302. In another example, as illustrated in FIG. 3, when the electronic device 101 is in the folded state (e.g., in a fully folded state), the hinge cover 330 may be exposed outward between the first housing structure 310 and the second housing structure 320. In another example, when the first housing structure 310 and the second housing structure 320 are folded with a certain angle in an intermediate state, the hinge cover 330 may be partially exposed between the first housing structure 310 and the second housing structure 320. In this case, however, the exposed area may be smaller than in the fully folded state. In an embodiment of the disclosure, the hinge cover 330 may include a curved surface.

According to various embodiments of the disclosure, the display 200 may be disposed in the space formed by the foldable housing 300. For example, the display 200 may be mounted in the recess formed by the foldable housing 300 and form most of the front surface of the electronic device 101. Accordingly, the front surface of the electronic device 101 may include the display 200, a partial area of the first housing structure 310 adjacent to the display 200, and a partial area of the second housing structure 320. Further, the rear surface of the electronic device 101 may include the first rear cover 380, a partial area of the first housing structure 310 adjacent to the first rear cover 380, the second rear cover 390, and a partial area of the second housing structure 320 adjacent to the second rear cover 390.

According to various embodiments of the disclosure, the display 200 may refer to a display which is deformable into a flat or curved surface over at least a partial area. According to an embodiment of the disclosure, the display 200 may include a folding area 203, a first area 201 disposed at one side of the folding area 203 (e.g., the left side of the folding area 203 in FIG. 2), and a second area 202 disposed at the other side of the folding area 203 (e.g., the right side of the folding area 203 in FIG. 2).

However, the area segmentation of the display 200 illustrated in FIG. 2, the display 200 may be divided into a plurality of areas (e.g., four or more areas or two areas) according to the structure or function of the display 200. For example, while the area of the display 200 may be divided by the folding area 203 or the folding axis A extending in parallel to the y axis in the embodiment illustrated in FIG. 2, the display 200 may be divided by another folding area (e.g., a folding area parallel to the x axis) or another folding axis (e.g., a folding axis parallel to the x axis). According to an embodiment of the disclosure, the display 200 may be combined with or disposed adjacent to a touch sensing circuit, a pressure sensor for measuring the intensity (pressure) of a touch, and/or a digitizer for detecting a magnetic field-based stylus pen.

According to various embodiments of the disclosure, the first area 201 and the second area 202 may be symmetrical in shape on the whole with respect to the folding area 203. However, although the second area 202 may include a notch cut (e.g., 204 of FIG. 4) according to the presence or absence of the sensor area 324, unlike the first area 201, the second area 202 may be symmetrical with the first area 201 in the other area. In other words, the first area 201 and the second area 202 may include portions symmetrical in shape and portions asymmetrical in shape.

Now, a description will be given of operations of the first housing structure 310 and the second housing structure 320 according to the states (e.g., the flat or unfolded state and the folded state) of the electronic device 101 (for example, a flat state or an unfolded state and a folded state), and each area of the display 200.

According to various embodiments of the disclosure, when the electronic device 101 is in the flat state (e.g., FIG. 2), the first housing structure 310 and the second housing structure 320 may be arranged at an angle of 180 degrees, facing in the same direction. The surface of the first area 201 and the surface of the second area 202 of the display 200 may be at 180 degrees with each other, and face in the same direction (e.g., the front direction of the electronic device). The folding area 203 may form the same plane as the first area 201 and the second area 202.

According to various embodiments of the disclosure, when the electronic device 101 is in the folded state (e.g., FIG. 3), the first housing structure 310 and the second housing structure 320 may be arranged to face each other. The surface of the first area 201 and the surface of the second area 202 of the display 200 may face each other at a narrow angle (e.g., between 0 degrees and 10 degrees). At least a part of the folding area 203 may be formed to be a curved surface of a first curvature. Here, the first curvature may be predetermined.

According to various embodiments of the disclosure, when the electronic device 101 is in the intermediate state, the first housing structure 310 and the second housing structure 320 may be at a certain angle with each other. The surface of the first area 201 and the surface of the second area 202 of the display 200 may form an angle larger than in the folded state and smaller than in the unfolded state. At least a part of the folding area 203 may be formed to be a curved surface of a curvature, and the curvature of the folding area 203 may be smaller than in the folded state. Here, the second curvature may be predetermined, and may be the same or different than the first curvature.

FIG. 4 is an exploded perspective view of an electronic device according to various embodiments of the disclosure.

Referring to FIG. 4, in various embodiments of the disclosure, the electronic device 101 may include a foldable housing, a display module 20, a substrate unit 600, and an adhesive structure 700. The foldable housing may include the first housing structure 310, the second housing structure 320, a bracket assembly 40, the first rear cover 380, the second rear cover 390, and the hinge structure 500.

According to various embodiments of the disclosure, the display module 20 may include a display 200 and one or more plates or layers (e.g., a support plate 240) on which the display 200 is mounted. In an embodiment of the disclosure, the support plate 240 may be disposed between the display 200 and the bracket assembly 40. The adhesive structure 700 may be disposed between the support plate 240 and the bracket assembly 40 to bond the support plate 240 and the bracket assembly 40 to each other.

According to various embodiments of the disclosure, the bracket assembly 40 may include a first mid plate 410 and a second mid plate 420. The hinge structure 500 is disposed between the first mid plate 410 and the second mid plate 420, and the hinge cover 330 may be disposed to cover the hinge structure 500, when the hinge structure 500 is seen from the outside. In another example, a PCB (e.g., a flexible printed circuit (FPC)) may be disposed across the first mid plate 410 and the second mid plate 420.

According to various embodiments of the disclosure, the substrate unit 600 may include a first circuit board 610 disposed on the side of the first mid plate 410 side and a second circuit board 620 disposed on the side of the second mid plate 420 side. The first circuit board 610 and the second circuit board 620 may be arranged in a space formed by the bracket assembly 40, the first housing structure 310, the second housing structure 320, the first rear cover 380, and the second rear cover 390. Components for executing various functions of the electronic device 101 may be mounted on the first circuit board 610 and the second circuit board 620.

According to various embodiments of the disclosure, the first housing structure 310 and the second housing structure 320 may be assembled to be coupled to both sides of the bracket assembly 40 while the display module 20 is coupled to the bracket assembly 40. According to an embodiment of the disclosure, the first housing structure 310 may include a first side member 311 surrounding at least a part of the side surface of the first mid plate 410, the second housing structure 320 may include a second side member 321 surrounding at least a part of the side surface of the second mid plate 420. The first housing structure 310 may include a first rotation support surface 312, and the second housing structure 320 may include a second rotation support surface 322 corresponding to the first rotation support surface 312. The first rotation support surface 312 and the second rotation support surface 322 may include curved surfaces corresponding to the curved surface included in the hinge cover 330.

According to an embodiment of the disclosure, when the electronic device 101 is in the flat state (e.g., the electronic device illustrated in FIG. 2), the first rotation support surface 312 and the second rotation support surface 322 may cover the hinge cover 330 so that the hinge cover 330 may not be exposed or minimally exposed from the rear surface of the electronic device 101. In another example, when the electronic device 101 is in the folded state (e.g., the electronic device illustrated in FIG. 3), the first rotation support surface 312 and the second rotation support surface 322 may rotate along the curved surface of the hinge cover 330 so that the hinge cover 330 may be exposed as much as possible from the rear surface of the electronic device 101.

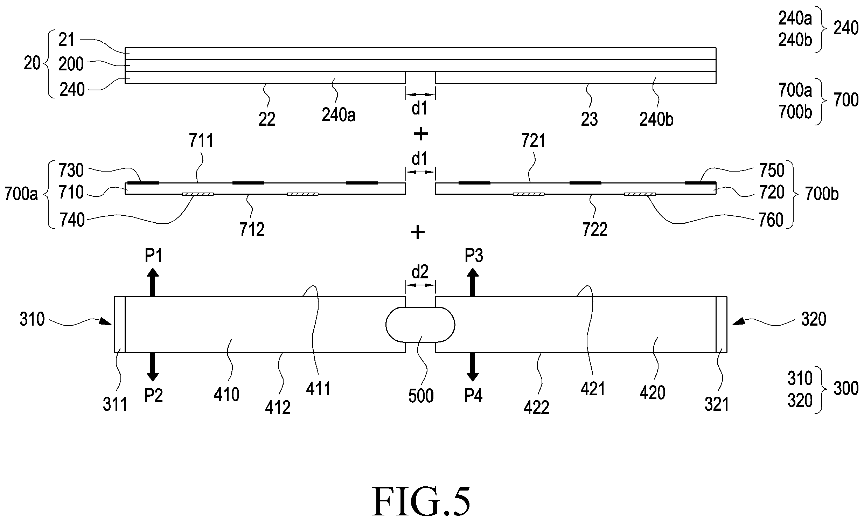

FIG. 5 is a cross-sectional view illustrating a side surface of an electronic device according to various embodiments of the disclosure.

Referring to FIG. 5, in various embodiments of the disclosure, the electronic device 101 includes the foldable housing 300, the flexible display module 20, and an adhesive structure (e.g., a first adhesive structure 700a and a second adhesive structure 700b). The foldable housing 300, the flexible display module 20, and the adhesive structure illustrated in FIG. 5 may be fully or partially identical to the first housing structure 310, the second housing structure 320, the display module 20, and the adhesive structure 700 illustrated in FIGS. 2 to 4.

According to various embodiments of the disclosure, the foldable housing 300 includes the hinge structure 500, the first housing structure 310, and the second housing structure 320. The first housing structure 310 includes the first mid plate 410 connected to one side of the hinge structure 500 and the first side member 311 surrounding at least one side surface of the first mid plate 410. The second housing structure 320 includes the second mid plate 420 connected to the other side of the hinge structure 500, and the second side member 321 surrounding at least one side surface of the second mid plate 420.

According to various embodiments of the disclosure, the foldable housing 300 may be configured such that the second housing structure 320 is rotatable with respect to the first housing structure 310. Along with the rotation, the first housing structure 310 and the second housing structure 320 may face each other in the folded state, or the first housing structure 310 and the second housing structure 320 may be arranged side by side in the flat state. FIG. 5 illustrates the flat state.

According to various embodiments of the disclosure, the first mid plate 410 of the first housing structure 310 includes a first surface 411 facing in a first direction P1 and a second surface 412 facing in a direction P2 opposite to the first direction P1. In another example, the second mid plate 420 of the second housing structure 320 includes a third surface 421 facing in a third direction P3 and a fourth surface 422 facing in a direction P4 opposite to the third direction P3. According to an embodiment of the disclosure, the first direction P1 and the third direction P3 may change from the same direction to facing directions by rotation of the hinge structure 500. In another example, the second direction P2 and the fourth direction P4 may change from the same direction to opposite directions by rotation of the hinge structure 500 by rotation of the hinge structure 500.

According to various embodiments of the disclosure, the flexible display module 20 extends from the first surface 411 onto the third surface 421, and includes a fifth surface 22 facing the first surface 411 and a sixth surface 23 facing the third surface 421. According to various embodiments of the disclosure, the flexible display module 20 may include a front plate 21, the display 200, and the support plate 240.

According to an embodiment of the disclosure, at least a part of the front plate 21 may be formed of a substantially transparent material. For example, the at least part of the front plate 21 may be formed to be a glass plate or polymer plate including various coating layers.

According to an embodiment of the disclosure, the display 200 may be exposed through much of the front plate 21. In some embodiments of the disclosure, an edge of the display 200 may be formed to be substantially the same as an adjacent outer shape of the front plate 21. In another embodiment of the disclosure (not shown), the distance between the outer periphery of the display 200 and the outer periphery of the front plate 21 may be substantially the same in order to increase the exposed area of the display 200.

According to an embodiment of the disclosure, the display 200 may be formed at least partially of a material through which a radio wave or a magnetic field is transmitted. The display 200 may be mounted with a display panel and/or a touch panel. For example, the display 200 may be used as an input device equipped with a touch screen function as well as an output device that outputs a screen. The display panel (e.g., an (active) organic light emitting diode) may include a display device layer including at least one pixel and a thin film transistor (TFT) layer coupled to the display device layer.

According to various embodiments of the disclosure, the support plate 240 may be disposed at the rear surface of the display 200 to support the front plate 21 and the display 200. The support plate 240 may include one or more plates on which the display 200 is mounted. For example, the support plate 240 may be a sus plate.

According to an embodiment of the disclosure, the support plate 240 may be disposed between the display 200 and the adhesive structure 700. For example, the support plate 240 may include a first support plate 240a and a second support plate 240b which are separated from each other. The first support plate 240a is disposed to face the first surface 411 of the first mid plate 410, and the second support plate 240b is disposed to face the third surface 421 of the second mid plate 420. The first support plate 240a and the second support plate 240b may be separated from each other by a distance equal to the distance (e.g., d1) between a plurality of adhesive structures (e.g., the first adhesive structure 700a and the second adhesive structure 700b).

According to various embodiments of the disclosure, the adhesive structure 700 is disposed between the foldable housing 300 and the display module 20 to bond the foldable housing 300 and the display module 20 to each other. have. The adhesive structure 700 includes the first adhesive structure 700a and the second adhesive layer arranged in correspondence with the support plates separated from each other (e.g., the first support plate 240a and the second support plate 240b). For example, the first adhesive structure 700a may be fabricated to have an area corresponding to the area of the first support plate 240a and disposed to face the first support plate 240a. The second adhesive structure 700b may be fabricated to have an area corresponding to the area of the second support plate 240b, and disposed to face the second support plate 240b. The first adhesive structure 700a and the second adhesive structure 700b are spaced apart by a first distance d1. The first distance d1 is smaller than the distance (e.g., a second distance d2) between the first housing structure 310 and the second housing structure 320.

According to various embodiments of the disclosure, the first adhesive structure 700a is disposed between the first surface 411 of the first housing structure 310 and the fifth surface 22 of the flexible display module 20. The first adhesive structure 700a includes a first substrate 710, a first adhesive layer 730, and a second adhesive layer 740.

According to an embodiment of the disclosure, the first substrate 710 may maintain the overall shape of the first adhesive structure 700a, and include a seventh surface 711 facing in the first direction P1 and an eighth face 712 facing in the second direction P2. The first substrate 710 may support a structure of a material of flexible elasticity. For example, the first substrate 710 may have an elastic modulus of 200Mpa to 1000Mpa. In another example, the first substrate 710 may contain at least one of silicon, polymer (polycarbonate (PC) or polyethylene terephthalate (PET)), rubber, or teflon.

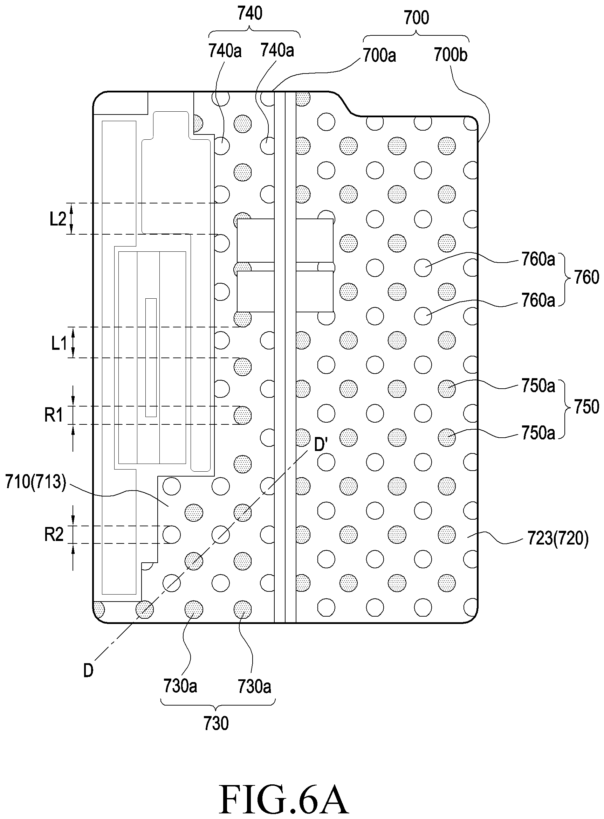

According to an embodiment of the disclosure, the first adhesive layer 730 is disposed on the seventh surface 711 of the first substrate 710 and includes a first pattern. The first pattern may include a plurality of first patches separated from each other (e.g., first patches 730a in FIG. 6A), and the plurality of first patches may be fabricated in various shapes such as circles, polygons, and lines.

According to an embodiment of the disclosure, the plurality of first patches (e.g., the first patches 730a in FIG. 6A) are disposed between the display module 20 and the first substrate 710 to attach the first support plate 240a to the first substrate 710. The plurality of first patches may be formed of an adhesive and elastic material such as a tape and a bond to provide deformation corresponding to a flexible operation of the display module.

In an embodiment of the disclosure, the second adhesive layer 740 is disposed on the eighth surface 712 of the first substrate 710 and includes a second pattern. The second pattern may include a plurality of second patches separated from each other (e.g., second patches 740a in FIG. 6A), and the plurality of second patches may be fabricated in various shapes such as circles, polygons, and lines.

In an embodiment of the disclosure, the plurality of second patches (e.g., the second patches 740a in FIG. 6A) may be disposed between the first substrate 710 and the first housing structure 310 to attach the first surface 411 of the first mid plate 410 to the first substrate 710. The plurality of second patches may be formed of an adhesive and elastic material such as a tape and a bond to provide deformation corresponding to a flexible operation of the display module.

According to an embodiment of the disclosure, the first pattern and the second pattern may be located without overlapping with each other. For example, when viewed from above the seventh surface 711 or the eighth surface 712, the second pattern may alternate with the first pattern so as not to overlap at least partially with the first pattern. The plurality of second patches 740a may be separated from each other, and the plurality of first patches 730a may be located in the spaces between the second patches 740a. The first pattern and the second pattern, which are disposed so as not to face each other with respect to the first substrate 710 as described above, may prevent a shear behavior produced from a relative movement mechanism between the first housing structure 310 and the second housing structure 320 from being transferred to the flexible display module 20.

According to various embodiments of the disclosure, the second adhesive structure 700b is disposed between the third surface 421 of the second housing structure 320 and the sixth surface 23 of the flexible display module 20. The second adhesive structure 700b includes a second substrate 720, a third adhesive layer 750, and a fourth adhesive layer 760.

According to an embodiment of the disclosure, the second substrate 720 may maintain the overall shape of the second adhesive structure 700b, and include a ninth surface 721 facing in the third direction P3 and a tenth face 722 facing in the fourth direction P4. The second substrate 720 may support a structure a material of flexible elasticity. For example, the second substrate 720 may have an elastic modulus of200Mpa to 1000Mpa. In another example, the second substrate 720 may contain at least one of silicon, polymer (PC or PET), rubber, or teflon.

According to an embodiment of the disclosure, the third adhesive layer 750 is disposed on the ninth surface 721 of the second substrate 720 and includes a third pattern. The third pattern may include a plurality of third patches separated from each other (e.g., third patches 750a in FIG. 6A), and the plurality of third patches may be fabricated in various shapes such as circles, polygons, and lines.

According to an embodiment of the disclosure, the plurality of third patches (e.g., the third patches 750a in FIG. 6A) may be disposed between the display module 20 and the second substrate 720 to attach the second support plate 240b of the display module 20 to the second substrate 720. The plurality of third patches may be formed of an adhesive and elastic material such as a tape and a bond to provide deformation corresponding to a flexible operation of the display module.

In an embodiment of the disclosure, the fourth adhesive layer 760 is disposed on the tenth surface 722 of the second substrate 720 and includes a fourth pattern. The fourth pattern may include a plurality of fourth patches separated from each other (e.g., fourth patches 760a in FIG. 6A), and the plurality of fourth patches may be fabricated in various shapes such as circles, polygons, and lines.

In an embodiment of the disclosure, the plurality of fourth patches (e.g., the fourth patches 740a in FIG. 6A) may be disposed between the second substrate 720 and the second housing structure 320 to attach the third surface 421 of the second mid plate 420 to the second substrate 720. The plurality of fourth patches may be formed of an adhesive and elastic material such as a tape and a bond to provide deformation corresponding to a flexible operation of the display module.

According to an embodiment of the disclosure, the third pattern and the fourth pattern may be located without overlapping with each other. For example, when viewed from above the ninth surface 721 or the tenth surface 722, the fourth pattern may alternate with the third pattern so as not to overlap at least partially with the third pattern. The plurality of fourth patches 760a may be separated from each other, and the plurality of third patches 750a may be located in the spaces between the fourth patches 760a. The third pattern and the fourth pattern, which are disposed so as not to face each other with respect to the second substrate 720 as described above, may prevent a shear behavior produced from a relative movement mechanism between the first housing structure 310 and the second housing structure 320 from being transferred to the flexible display module 20.

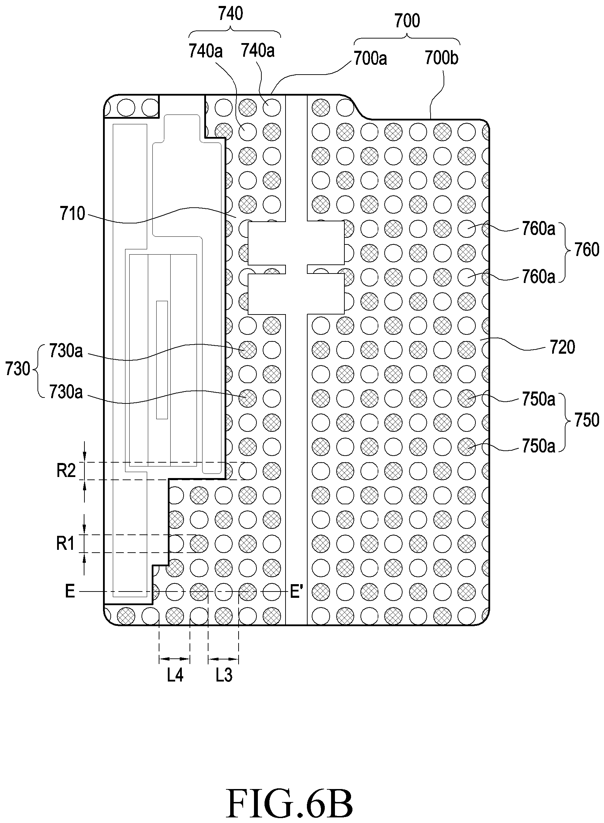

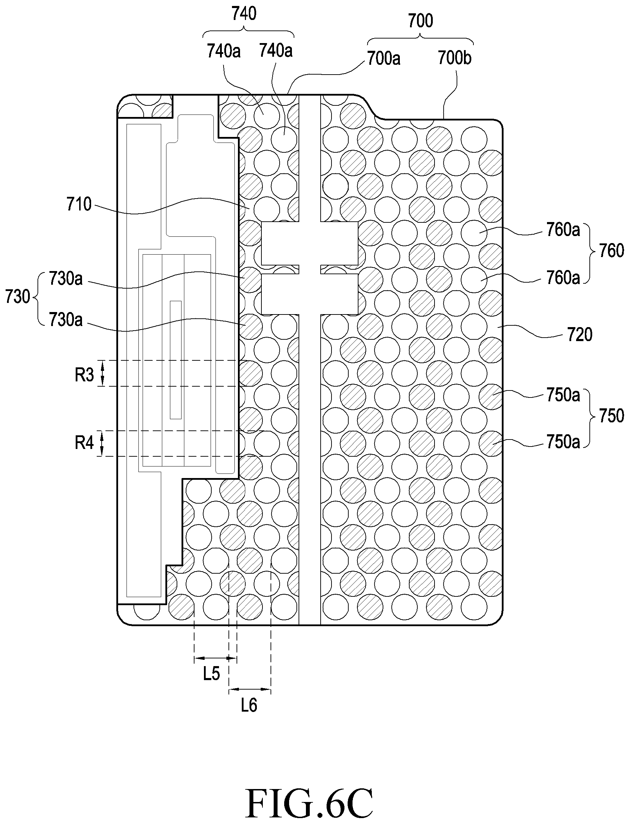

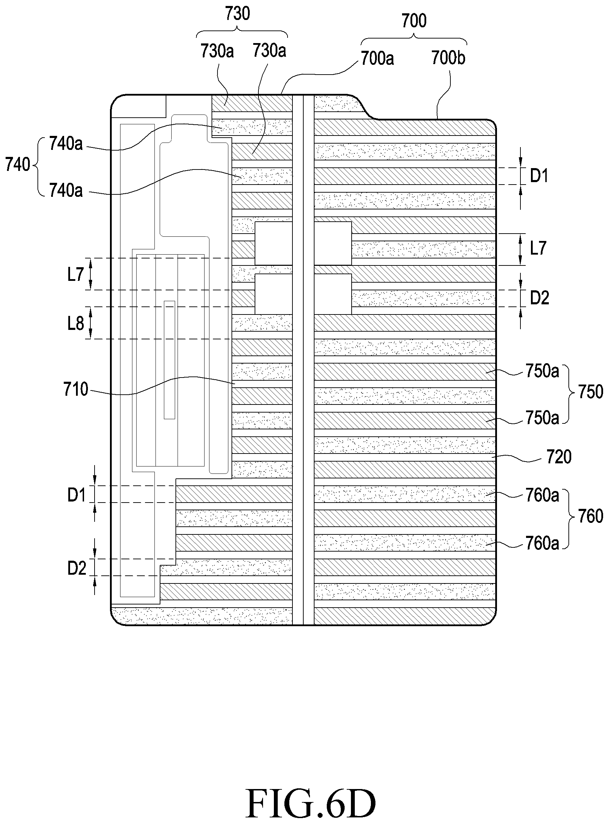

FIGS. 6A to 6D illustrate various forms of adhesive structures according to various embodiments of the disclosure. FIG. 6A illustrates an adhesive structure including patterns of a first shape, FIG. 6B illustrates an adhesive structure including patterns of a second shape, and FIG. 6C illustrates an adhesive structure including patterns of a third shape, and FIG. 6D illustrates an adhesive structure including patterns of a fourth shape.

According to various embodiments of the disclosure, the electronic device 101 may include a foldable housing (e.g., the foldable housing 300 in FIG. 5), a flexible display module (e.g., the flexible display module 20 in FIG. 5), and the adhesive structure 700 (e.g., the first adhesive structure 700a and the second adhesive structure 700b).

Referring to FIGS. 6A to 6D, in various embodiments of the disclosure, the adhesive structure 700 may be disposed between the foldable housing 300 and the display module 20 to bond the foldable housing 300 and the display module 20 to each other. The adhesive structure 700 may include the first adhesive structure 700a and the second adhesive structure 700b separated from each other in correspondence with the supporting plates of the display module 20 separated from each other. The adhesive structure 700 of FIGS. 6A to 6D may be fully or partially identical to the adhesive structure 700 of FIG. 5.

Referring to FIGS. 6A to 6D, the first adhesive structure 700a may include the first substrate 710, the first adhesive layer 730, and the second adhesive layer 740. The second adhesive structure 700b may include the second substrate 720, the third adhesive layer 750, and the fourth adhesive layer 760.

According to various embodiments of the disclosure, the first adhesive layer 730 may include a first pattern, and the first pattern may include a plurality of first patches 730a separated from each other. The second adhesive layer 740 may include a second pattern, and the second pattern may include a plurality of second patches 740a separated from each other. The third adhesive layer 750 may include a third pattern, and the third pattern may include a plurality of third patches 750a separated from each other. The fourth adhesive layer 760 may include a fourth pattern, and the fourth pattern may include a plurality of fourth patches 760a separated from each other. The first adhesive structure 700a will be described below in detail, and the configuration of the first adhesive structure 700a also applies to the second adhesive structure 700b. For the convenience of description, when viewed from the front or rear surface of the first adhesive structure 700a, the plurality of first patches 730a and the plurality of second patches 740a are shown to be within the field of view.

Referring to FIG. 6A, the plurality of first patches 730a may be formed into the first shape which is circles having the same diameter R1. The plurality of second patches 740a may be formed into the first shape which is circles having the same diameter R2. The diameter R1 of the first patches 730a and the diameter R2 of the second patches 740a may be equal.

According to an embodiment of the disclosure, adjacent first patches among the plurality of first patches 730a may be disposed on the front surface of the first substrate 710, separated from each other by a first distance L1. Adjacent second patches among the plurality of second patches 740a may be disposed on the rear surface of the first substrate 710, separated from each other by a second distance L2 equal to or different from the first distance L1 between first patches.

According to an embodiment of the disclosure, the first patches 730a and the second patches 740a may be arranged separated from each other without overlapping with each other. For example, the first patches 730a and the second patches 740a may alternate on a virtual first line D-D' that crosses the first adhesive structure 700a. In another example, the plurality of second patches 740a may be arranged at positions separated from the center of one of the first patches 730a by the same distance.

According to an embodiment, when viewed from above the first adhesive structure 700a (e.g., from above the seventh surface 711 in FIG. 5), the first substrate 710 may include a first buffer area 713 in which neither the first pattern nor the second pattern is located. For example, the distance between adjacent patches among the plurality of first patches 730a may be longer than the diameter of one second patch disposed between the adjacent first patches.

According to an embodiment of the disclosure, when viewed from above the first adhesive structure 700a (e.g., from above the ninth surface 721 in FIG. 5), the second substrate 720 may include a second buffer area 723 in which neither the first pattern nor the second pattern is located. For example, the distance between adjacent patches among the plurality of second patches 740a may be longer than the diameter of one first patch disposed between the adjacent second patches.

Referring to FIG. 6B, the plurality of first patches 730a may be formed into the second shape which is circles having the same diameter R1. The plurality of second patches 740a may be formed into the second shape which is circles having the same diameter R2. The diameter R1 of the first patches 730a and the diameter R2 of the second patches 740a may be equal. Compared to FIG. 6A, the second shape may be different from the first shape.

According to an embodiment of the disclosure, adjacent first patches among the plurality of first patches 730a may be disposed on the front surface of the first substrate 710, separated from each other by a third distance L3. Adjacent second patches among the plurality of second patches 740a may be disposed on the rear surface of the first substrate 710, separated from each other by a fourth distance L4. The fourth distance L4 may be equal to or different from the third distance L3. Compared to FIG. 6A, the third distance L3 and/or the fourth distance L4 may be less than the first distance L1 and/or the second distance L2.

According to an embodiment of the disclosure, the first patches 730a and the second patches 740a may be arranged separated from each other without overlapping with each other. For example, the first patches 730a and the second patches 740a may alternate on a virtual second line E-E' that crosses the first adhesive structure 700a.

Referring to FIG. 6C, the plurality of first patches 730a may be formed into the third shape which is circles having the same diameter R3. The plurality of second patches 740a may be formed into the third shape which is circles having the same diameter R4. The diameter R3 of the first patches 730a and the diameter R4 of the second patches 740a may be equal. Compared to FIGS. 6A and 6B, the third shape may be different from the first and second shapes. The third diameter R3 and/or the fourth diameter R4 may be less than the first diameter R1 and/or the second diameter R2.

According to an embodiment of the disclosure, adjacent first patches among the plurality of first patches 730a may be disposed on the front surface of the first substrate 710, separated from each other by a fifth distance L5. Adjacent second patches among the plurality of second patches 740a may be disposed on the rear surface of the first substrate 710, separated from each other by a sixth distance L6. The sixth distance L6 may be equal to or different from the fifth distance L5. Compared to FIGS. 6A and 6B, the fifth distance L5 and/or the sixth distance L6 may be less than the first to fourth distances L1 to L4.

Referring to FIG. 6D, the plurality of first patches 730a and the plurality of second patches 740a may be provided as lines of a same thickness or different thicknesses. Each of the plurality of first patches 730a may be disposed in a first thickness D1, and each of the plurality of second patches 740a may be disposed in a second thickness D2. The second thickness D2 may be equal to or different from the first thickness D1.

According to an embodiment of the disclosure, adjacent first patches among the plurality of first patches 730a may be disposed separated from each other by a seventh distance L7, and adjacent second patches among the plurality of second patches 740a may be disposed separated from each other by an eighth distance L8. The eighth distance L8 may be equal to or different from the seventh distance L7.

Table 1 below illustrates stresses applied to the display module 20 according to the adhesive structure 700 in various experiments.

**Table 1**

| Staggered pattern | UB stress (MPa) | Base rigidity | UB stress (MPa) | Adhesive part diameter (mm) | UB stress (MPa) | Pattern gap (mm) | UB stress (MPa) |
|---|---|---|---|---|---|---|---|
| Apply | 14 | 50 | 85 | 5 | 22 | 5 | 60 |
| Not apply | 26 | 500 | 60 | 8 | 14 | 2 | 22 |
| | | 1000 | 39 | | | | |

According to various embodiments, the stress of the display module 20 may vary according to various conditions of the adhesive structure 700. According to an embodiment of the disclosure, if the plurality of first patches 730a and the plurality of second patches 740a of the adhesive structure 700 are formed in a staggered pattern without overlapping with each other on the premise that other experiment conditions are the same, it may be noted that the stress applied to the display module 20 is reduced by almost a half. For example, when the staggered pattern is not applied, the stress is about 26Mpa, while when the staggered pattern is applied, the stress is about 14Mpa.

According to an embodiment of the disclosure, it may be noted that as the first substrate 710 on which the plurality of first patches 730a and the plurality of second patches 740a of the adhesive structure 700 are attached is more rigid on the premise that other experimental conditions are the same, the stress applied to the display module 20 is reduced. For example, if the rigidity of the first substrate 710 is approximately 50Mpa, the stress is approximately 85Mpa. If the rigidity of the first substrate 710 is approximately 500Mpa, the stress is approximately 60Mpa. If the rigidity of the first substrate 710 is approximately 1000Mpa, the stress is approximately 39Mpa.

According to an embodiment of the disclosure, it may be noted that on the premise that other experimental conditions are the same, as the diameters of the plurality of first patches 730a and the plurality of second patches 740a of the adhesive structure 700 are larger, the stress applied to the display module 20 decreases. For example, when the diameter of the patches is about 5mm, the stress is about 22Mpa, whereas when the diameter of the patches is about 3mm, the stress is about 14Mpa.

According to an embodiment of the disclosure, it may be noted that on the premise that other experimental conditions are the same, as the distance between the plurality of first patches 730a and/or the plurality of second patches 740a of the adhesive structure 700 decreases, the stress applied to the display module 20 decreases. For example, when the distance between the patches is approximately 5mm, the stress is approximately 60Mpa, whereas when the distance between the patches is approximately 2mm, the stress is approximately 22Mpa.

A structure for reducing the stress of the display module may be designed according to patterns of adhesive parts of the adhesive structure 700, the diameters of the patterns, the distance between the patterns, or the rigidity of a substrate in various experiments of Table 1.

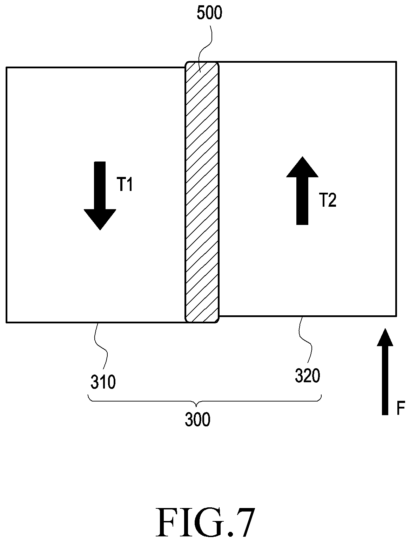

FIG. 7 is a diagram illustrating directions in which a relative movement of a foldable housing occurs according to various embodiments of the disclosure.

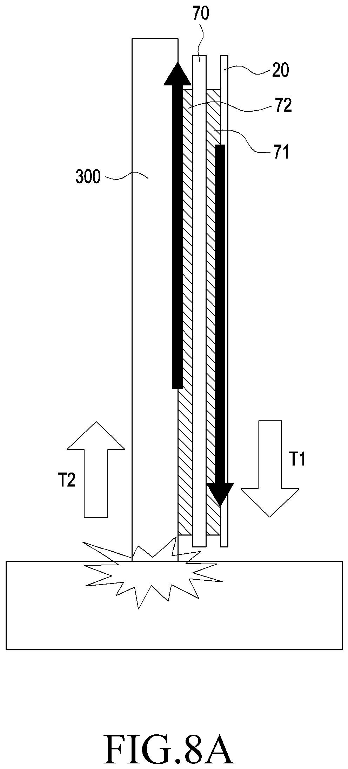

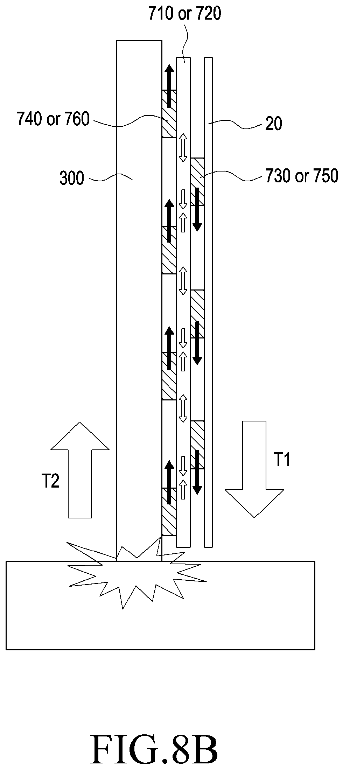

FIGS. 8A and 8B are lateral views illustrating directions in which a relative movement of a foldable housing occurs in a comparison between a comparative example, according to various embodiments of the disclosure. FIG. 8A illustrates the configuration of an electronic device with an adhesive structure according to the comparative example, and FIG. 8B illustrates the configuration of an electronic device with an adhesive structure according to the embodiment of the disclosure.

According to various embodiments of the disclosure, the electronic device (e.g., the electronic device 101 in FIG. 1) may include the foldable housing 300, the flexible display module 20, and the adhesive structure 700 (e.g., the first adhesive structure 700a and the second adhesive structure 700b in FIG. 5). In various embodiments of the disclosure, the adhesive structure 700 may be disposed between the foldable housing 300 and the display module 20 to bond the foldable housing 300 and the display module 20 to each other. The adhesive structure 700 may include the first adhesive structure 700a and the second adhesive structure 700b separated from each other in correspondence with the supporting plates of the display module 20 separated from each other. The foldable housing 300, the display module 20, and the adhesive structure 700 illustrated in FIGS. 7, 8A, and 8B may be fully or partially identical to the foldable housing 300, the display module 20, the adhesive structure 700 illustrated in FIG. 5.

Referring to FIGS. 7, 8A, and 8B, when an external force F is applied to the foldable housing 300, which is a cover area of the electronic device 101, distortion may occur in view of relative movements of the first housing structure 310 and the second housing structure 320. For example, due to the external force F, stress may occur to the first housing structure 310 and the second housing structure 320 separated from each other with respect to the hinge structure 500 by the external force F, and the display module 20 facing each of the first housing structure 310 and the second housing structure 320. When a shear-direction (e.g., T1 and T2-direction) behavior occurs due to the fall of the electronic device 101, the external force F applied to the foldable housing 300 may be transferred to the display module 20 through the adhesive structure 700.

In the adhesive structure of the comparative example illustrated in FIG. 8A, a front adhesive part 71 and a rear adhesive part 72 disposed on both sides of a substrate 70 are disposed, facing each other. When the electronic device is viewed from the front or the rear thereof, there may be an overlapped area between the front adhesive part 71 and the rear adhesive part 72. For example, each of the front adhesive part 71 and the rear adhesive part 72 of the adhesive structure of FIG. 8A includes one adhesive layer, and the front adhesive part 71 and the rear adhesive part 72 overlap with each other over their entire surfaces. When an external force is applied to the foldable housing 300, a shearing force may be transferred to the substrate 70 by the relative movement of the first housing structure 310 and the second housing structure 320. The shearing force is not distributed to the area over which the front adhesive part 71 and the rear adhesive part 72 overlap with each other, and the stress of the substrate 70 is concentrated, not distributed. This may cause damage to the display module 20 coupled to the adhesive structure.

The adhesive structure 700 according to the embodiment of the disclosure illustrated in FIG. 8B includes front adhesive parts 730 or 750 and rear adhesive parts 740 or 760 disposed on both sides of the substrate 710 or 720 which may not face each other. For example, when the electronic device is viewed from the front or the rear thereof, the front adhesive parts 730 or 750 and the rear adhesive parts 740 or 760 may be arranged such that the generation of an overlapped area is limited. If each of the front adhesive parts 730 or 750 of the adhesive structure 700 in FIG. 8B includes a plurality of patches, and one area of the substrate 710 or 720 is coupled with a component, an adhesive part (e.g. the rear adhesive parts 740 or 760) may not be located on the opposite surface.

When an external force is generated in the foldable housing 300, a shearing force may be transferred to the substrate 710 or 720 by the relative movement of the first housing structure 310 and the second housing structure 320. The substrate 710 or 720 to which the shear force has been transferred may be deformed due to elasticity, and compression and tension may alternately occur in an area between non-overlapped adhesive parts (e.g., a buffer area in the substrate 710 or 720). The alternate occurrence of compression and tension may reduce the stress transmitted to the substrate 710 or 720, and distribute the stress of the display module 20 coupled to the substrate 710 or 720. In comparison with FIG. 8A, the structure of FIG. 8B may maintain the adhesion of the adhesive structure, prevent damage to the substrate, and reduce the stress of the display module.

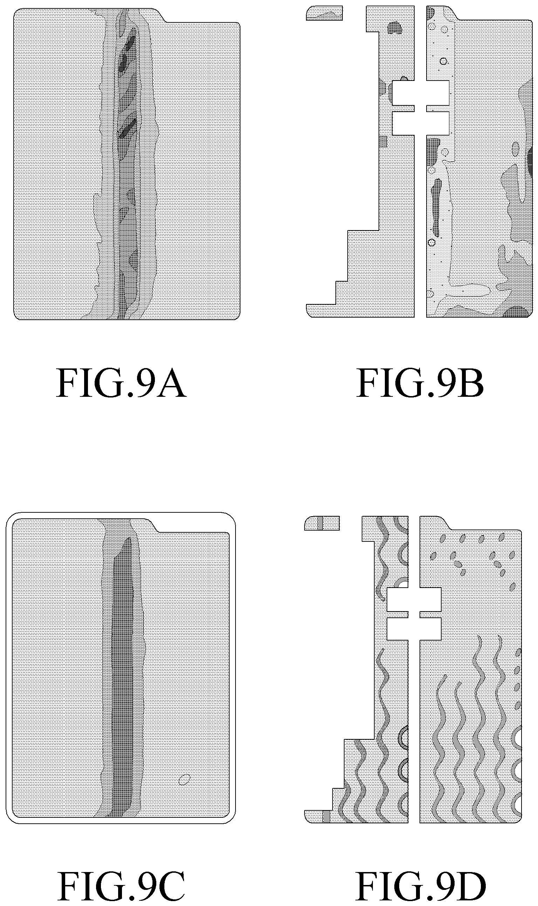

FIGS. 9A to 9D are diagrams illustrating variations in stress applied to a display module and strain rates of an adhesive structure in a comparison between a comparative example and an embodiment of the disclosure.

Referring to FIG. 9A, FIG. 9A illustrates a change in color of the stress of the display module generated in a hinge structure and an adjacent area in a Charpy test, when an external force is applied to a housing of an electronic device with an adhesive structure according to the comparative example. The Charpy test means that the amount of stress is higher in a lighter color. The adhesive structure according to the comparative example in FIG. 9A may be based on the structure of FIG. 8A. Regarding the amount of stress in the display module of FIG. 9A, the stress is concentrated in a specific area (e.g., the hinge structure and the adjacent area to which an impact is applied), and the amount of stress may be approximately 26Mpa.

Referring to FIG. 9C, FIG. 9C illustrates a change in color of the stress of the display module generated in a hinge structure and an adjacent area in a Charpy test, when an external force is applied to a housing of an electronic device with an adhesive structure according to an embodiment of the disclosure. The adhesive structure of FIG. 9C may be based on the structure of FIG. 8B. Regarding the amount of stress in the display module of FIG. 9C, compared to FIG. 9A, the stress is relatively reduced in a specific area (e.g., the hinge structure and the adjacent area to which an impact is applied), and the amount of stress may be approximately 14Mpa.

Referring to FIG. 9B, FIG. 9B illustrates a strain rate of an adhesive layer in the adhesive structure in a Charpy test when the external force is applied to the housing of the electronic device with the adhesive structure according to the comparative example. The Charpy test means that the amount of stress is higher in a lighter color. The adhesive structure according to the comparative example in FIG. 9B may be based on the structure of FIG. 8A. Regarding the strain of the adhesive layer of FIG. 9B, it may be noted that an area where strain occurs is concentrated in a specific area (e.g., the hinge structure and an end area of the housing structure to which an impact is applied).

Referring to FIG. 9D, FIG. 9D illustrates a strain rate of an adhesive layer in the adhesive structure in a Charpy test when the external force is applied to the housing of the electronic device with the adhesive structure according to the embodiment of the disclosure. The Charpy test means that the amount of stress is higher in a lighter color. The adhesive structure according to the comparative example in FIG. 9D may be based on the structure of FIG. 8B. Regarding the strain of the adhesive layer of FIG. 9D, it may be noted that the strain is relatively evenly distributed by compression and tension of the substrate without stress concentration in a specific area, compared to FIG. 9B.

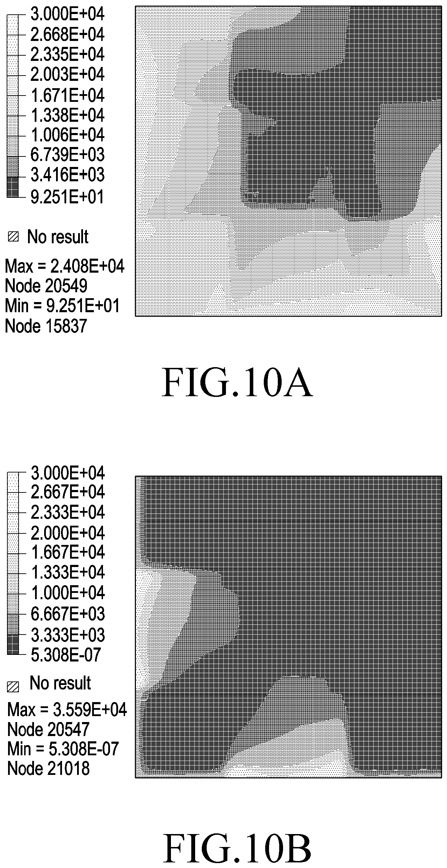

FIGS. 10A and 10B are diagrams illustrating changes in stress applied to a part of a display module in a comparison between a comparative example, according to various embodiments of the disclosure.

Referring to FIG. 10A, when an external force is applied to a housing of an electronic device with an adhesive structure according to the comparative example, the stress of a display module may be seen from a color change. The amount of stress is higher in a bluer color. The adhesive structure according to the comparative example in FIG. 10A may be based on the structure of FIG. 8A. For example, Adhesive parts disposed on both sides of the adhesive structure attached to the display module may overlap with each other. Regarding the amount of stress in a part of the display module in FIG. 10A, stress caused by an external force may be concentrated, not distributed, thereby transferring a strong impact to the display module. The amount of stress may be approximately 5.5E + 04Kpa.

Referring to FIG. 10B, when an external force is applied to a housing of an electronic device with an adhesive structure according to the embodiment of the disclosure, the stress of a display module occurring in a hinge structure and an adjacent area may be seen from a color change. The adhesive structure according to the comparative example in FIG. 10B may be based on the structure of FIG. 8B. For example, adhesive parts disposed on both sides of the adhesive structure attached to the display module may not overlap with each other. Regarding the amount of stress in the display module in FIG. 10B, it may be noted that the stress distribution is reduced relative to FIG. 10A. This may imply that stress caused by an external force is distributed by the adhesive structure and then transferred to the display module. Even the amount of strongest stress may be approximately 2.500E04 KPa or less.

According to various embodiments of the disclosure, an electronic device (e.g., the electronic device 101 in FIG. 1) may include a foldable housing (e.g., the foldable housing 300 in FIG. 5), a flexible display module (e.g., the flexible display module 20 in FIG. 5), a first adhesive layer (e.g., the first adhesive structure 700a in FIG. 5), and a second adhesive layer (e.g., the second adhesive structure 700b in FIG. 5). The foldable housing may include a hinge structure (e.g., the hinge structure 500 in FIG. 5), a first housing structure (e.g., the first housing structure 310 in FIG. 5), and a second housing structure (e.g., the second housing structure 320 in FIG. 5). The first housing structure may be coupled to the hinge structure, and include a first mid plate (e.g., the first mid plate 410 in FIG. 5) including a first surface (e.g., the first surface 411 in FIG. 5) facing in a first direction and a second surface (e.g., the second surface 412 in FIG. 5) facing in a second direction opposite to the first direction, and a first side member (e.g., the first side member 311 in FIG. 5) surrounding at least a part of a side surface of the first mid plate. The second housing structure may be coupled to the hinge structure, include a second mid plate (e.g., the second mid plate 420 in FIG. 5) including a third surface facing in a third direction and a fourth surface facing in a fourth direction opposite to the third direction, and a second side member (e.g., the second side member 321 in FIG. 5) surrounding at least a part of a side surface of the second mid plate, and be folded to the first housing structure with respect to the hinge structure. In the foldable housing, the first surface may face the third surface in a folded state, and the third direction may be identical to the first direction in an unfolded state. The flexible display module may be extended from the first surface to the third surface, and including a fifth surface (e.g., the fifth surface 22 in FIG. 5) facing the first surface, and a sixth surface (e.g., the sixth surface 23 in FIG. 5) facing the third surface. The first adhesive structure disposed between the first surface and the fifth surface may include a first substrate (e.g., the first substrate 710 in Fig. 5) including a seventh surface (e.g., the seventh surface 711 in FIG. 5) facing in the first direction and an eighth surface (e.g., the eighth surface 712 in FIG. 5) facing in the second direction, a first adhesive layer (e.g., the first adhesive layer 730 in FIG. 5) disposed on the seventh surface and including a first pattern, and a second adhesive layer (e.g., the second adhesive layer 740 in FIG. 5) disposed on the eighth surface, and including a second pattern which does not at least partially overlap with the first pattern, when seen from above the seventh surface. The second adhesive structure disposed between the third surface and the sixth surface may include a second substrate (e.g., the second substrate 720 in FIG. 5) including a ninth surface (e.g., the ninth surface 721 in FIG. 5) facing in the third direction and a tenth surface (e.g., the tenth surface 722 in FIG. 5) facing in the fourth direction, a third adhesive layer (e.g., the third adhesive layer 750 in FIG. 5) disposed on the ninth surface and including a third pattern, and a fourth adhesive layer (e.g., the fourth adhesive layer 760 in FIG. 5) disposed on the tenth surface, and including a fourth pattern which does not at least partially overlap with the third pattern, when seen from above the ninth surface.

According to various embodiments of the disclosure, the first pattern may include a plurality of first patches (e.g., the first patches 730a in FIG. 6A) separated from each other, and the second pattern includes a plurality of second patches (e.g., the second patches 740a in FIG. 6A) separated from each other.

According to various embodiments of the disclosure, the first patches and the second patches may be circular.

According to various embodiments of the disclosure, the third pattern may include a plurality of third patches (e.g., the third patches 750a in FIG. 6A) separated from each other, and the fourth pattern includes a plurality of fourth patches (e.g., the fourth patches 760a in FIG. 6A) separated from each other.

According to various embodiments of the disclosure, the third patches and the fourth patches may be circular.

According to various embodiments of the disclosure, when seen from above the seventh surface, the first substrate may include a first buffer area (e.g., the first buffer area 713 in FIG. 6A) in which the first pattern and the second pattern are not located, and when seen from above the ninth surface, the second substrate includes a second buffer area (e.g., the second buffer area 723 in FIG. 6A) in which the third pattern and the fourth pattern are not located.

According to various embodiments of the disclosure, a separation distance between adjacent first patches among the plurality of first patches may be greater than a diameter of one second patch located between the adjacent first patches, and a separation distance between adjacent second patches among the plurality of second patches may be greater than a diameter of one first patch located between the adjacent second patches.

According to various embodiments of the disclosure, a separation distance between adjacent third patches among the plurality of third patches may be greater than a diameter of one fourth patch located between the adjacent third patches, and a separation distance between adjacent fourth patches among the plurality of fourth patches may be greater than a diameter of one third patch located between the adjacent fourth patches.

According to various embodiments of the disclosure, the first adhesive structure and the second adhesive structure are separated from each other by a first distance (e.g., the first distance d1 in FIG. 5).

According to various embodiments of the disclosure, the first housing structure and the second housing structure may be separated from each other by a second distance (e.g., the second distance d2 in FIG. 5), and the second distance is greater than the first distance.

According to various embodiments of the disclosure, the flexible display module may include a transparent front plate (e.g., the front plate 21 in FIG. 5), a display (e.g., the display 200 in FIG. 5) exposed by the front plate, and a plurality of support plates 9 (e.g., the support plate 240 in FIG. 5) disposed on a rear surface of the display to correspond to the fifth and sixth surfaces, respectively.

According to various embodiments of the disclosure, the support plates may include a first support plate (e.g., the first support plate 240a in FIG. 5) disposed to correspond to the seventh surface of the first adhesive structure, and a second support plate (e.g., the second support plate 240b in FIG. 5) separated from the first support plate and disposed to correspond to the ninth surface of the second adhesive structure.

According to various embodiments of the disclosure, a separate distance between the first support plate and the second support plate may correspond to the first distance.

According to various embodiments of the disclosure, the plurality of first patches and the plurality of second patches may be arranged alternately with each other on a virtual straight line (e.g., the first virtual line D-D' in FIG. 6A or the second virtual line E-E' in FIG. 6B) crossing the first adhesive structure.

According to various embodiments of the disclosure, the plurality of first patches and the plurality of second patches may be shaped into lines of a same thickness or different thicknesses, the first patches may be arranged apart from each other in a direction perpendicular to the first direction, and when seen from above the seventh surface, the second patches may be arranged apart from each other in parallel to the first patches.

According to various embodiments of the disclosure, an electronic device may include a hinge cover (e.g., the hinge cover 330 in FIG. 3) covering a hinge structure (e.g., the hinge structure 500 in FIG. 5), a first housing structure (e.g., the first housing structure 310 in FIG. 5) coupled to the hinge structure and including a first main circuit board (e.g., the first circuit board 610 in FIG. 4), a second housing structure (e.g., the second housing structure 320 in FIG. 5) coupled to the hinge structure, including a second main circuit board (e.g., the second circuit board 620 in FIG. 4), and rotatable on the hinge structure with respect to the first housing structure, a flexible display module (e.g., the flexible display module 20 in FIG. 5) extended from one surface of the first housing structure to one surface of the second housing structure, and disposed to at least partially face the hinge cover, and an adhesive structure (e.g., the adhesive structure 700 in FIG. 5) disposed to face the first and second housing structures and bonded to the flexible display module. The adhesive structure may include a substrate (e.g., the first substrate 710 or the second substrate 720 in FIG. 5), a front adhesive layer (e.g., the first adhesive layer 730 or the third adhesive layer 750 in FIG. 5) disposed on a first surface of the substrate to face the flexible display module, and including a first pattern, and a rear adhesive layer (e.g., the second adhesive layer 740 or the fourth adhesive layer 760 in FIG. 5) disposed on a second surface of the substrate to face the first housing structure or the second housing structure, including a second pattern, and formed not to face the front adhesive layer.

According to various embodiments of the disclosure, the adhesive structure may include a first adhesive structure (e.g., the first adhesive structure 700a in FIG. 5) disposed to face the first housing structure, and a second adhesive structure (e.g., the second adhesive structure 700b in FIG. 5) disposed to face the second housing structure, and the first adhesive structure and the second adhesive structure may contain an elastic material.

According to various embodiments of the disclosure, the first adhesive structure and the second adhesive structure may be separated from each other by a first distance, the first housing structure and the second housing structure may be separated from each other by a second distance, and the second distance may be greater than the first distance.

According to various embodiments of the disclosure, the first pattern of the front adhesive layer may include a plurality of patches apart from each other, and the second pattern of the rear adhesive layer may include a plurality of patches identical to the plurality of patches of the first pattern.

According to various embodiments of the disclosure, when seen from above the adhesive structure, the substrate may include a buffer area in which the first pattern and the second pattern are not located, the buffer area may be tensioned or compressed in correspondence with a relative movement of the first housing structure and the second housing structure, and the tension or compression may mitigate stress transferred to the display module.

As is apparent from the foregoing description, in an electronic device according to various embodiments of the disclosure, an adhesive structure including a plurality of adhesive layers is disposed between a foldable housing and a flexible display, and the adhesive layers are arranged without overlapping with each other. Therefore, stress transferred to the flexible display module may be distributed.

According to various embodiments of the disclosure, an adhesive structure disposed in a foldable electronic device is formed to include a substrate and adhesive layers disposed on both surfaces of the substrate, and the adhesive layers are arranged without overlapping with each other. Therefore, stress generated from a relative movement of the electronic device may be distributed into the substrate, thereby maintaining an adhesive force.

While the disclosure has been shown and described with reference to various embodiments thereof, it will be understood by those skilled in the art that various changes in form and details may be made therein without departing from the scope of the disclosure as defined by the appended claims.

## Claims

1. An electronic device (101) comprising:
a foldable housing (300) including:
a hinge structure (500);
a first housing structure (310) coupled to the hinge structure, and including a first mid plate (410) including a first surface (411) facing in a first direction (P1) and a second surface (412) facing in a second direction (P2) opposite to the first direction, and a first side member (311) surrounding at least a part of a side surface of the first mid plate; and
a second housing structure (320) coupled to the hinge structure, including a second mid plate (420) including a third surface (421) facing in a third direction (P3) and a fourth surface (422) facing in a fourth direction (P4) opposite to the third direction, and a second side member (321) surrounding at least a part of a side surface of the second mid plate, and folded to the first housing structure with respect to the hinge structure, wherein the first surface faces the third surface in a folded state, and the third direction is identical to the first direction in an unfolded state;
a flexible display module (20) extended from the first surface to the third surface, and including a fifth surface (22) facing the first surface, and a sixth surface (23) facing the third surface;
a first adhesive structure (700a) disposed between the first surface and the fifth surface, and including:
a first substrate (710) including a seventh surface facing in the first direction and an eighth surface (712) facing in the second direction;
a first adhesive layer (730) disposed on the seventh surface (711) and including
a first pattern; and
a second adhesive layer (740) disposed on the eighth surface (712), and including a second pattern which at least partially does not overlap with the first pattern, when seen from above the seventh surface; and
a second adhesive structure (770b) disposed between the third surface and the sixth surface, and including:
a second substrate (720) including a ninth surface (721) facing in the third direction and a tenth surface (722) facing in the fourth direction;
a third adhesive layer (750) disposed on the ninth surface and including a third pattern; and
a fourth adhesive layer (760) disposed on the tenth surface (722), and including a fourth pattern which at least partially does not overlap with the third pattern, when seen from above the ninth surface,
**characterized in that**
when the electronic device is in the unfolded state:
- the first adhesive structure and the second adhesive structure are separated from each other by a first distance, and
- the first housing structure and the second housing structure are separated from each other by a second distance, wherein the second distance is greater than the first distance.

2. The electronic device according to claim 1, wherein the first pattern includes a plurality of first patches (730a) separated from each other, and the second pattern includes a plurality of second patches (740a) separated from each other.

3. The electronic device according to claim 2, wherein the first patches and the second patches are circular.

4. The electronic device according to claim 2, wherein the plurality of first patches and the plurality of second patches are arranged alternately with each other on a virtual straight line crossing the first adhesive structure.

5. The electronic device according to claim 2,
wherein the plurality of first patches and the plurality of second patches are shaped into lines of a same thickness or different thicknesses, and
wherein the first patches are arranged apart from each other in a direction perpendicular to the first direction, and when seen from above the seventh surface, the second patches are arranged apart from each other in parallel to the first patches.

6. The electronic device according to claim 3, wherein a separation distance between adjacent first patches among the plurality of first patches is greater than a diameter of one second patch located between the adjacent first patches, and a separation distance between adjacent second patches among the plurality of second patches is greater than a diameter of one first patch located between the adjacent second patches.

7. The electronic device according to claim 1, wherein the third pattern includes a plurality of third patches (750a) separated from each other, and the fourth pattern includes a plurality of fourth patches (760a) separated from each other.

8. The electronic device according to claim 7, wherein the third patches and the fourth patches are circular.

9. The electronic device according to claim 8, wherein a separation distance between adjacent third patches among the plurality of third patches is greater than a diameter of one fourth patch located between the adjacent third patches, and a separation distance between adjacent fourth patches among the plurality of fourth patches is greater than a diameter of one third patch located between the adjacent fourth patches.

10. The electronic device according to claim 1, wherein, when seen from above the seventh surface, the first substrate includes a first buffer area in which the first pattern and the second pattern are not located, and when seen from above the ninth surface, the second substrate includes a second buffer area in which the third pattern and the fourth pattern are not located.

11. The electronic device according to claim 1, wherein the flexible display module includes:
a transparent front plate (21);
a display (200) exposed by the front plate; and
a plurality of support plates (240) disposed on a rear surface of the display to correspond to the fifth and sixth surfaces, respectively.

12. The electronic device according to claim 11, wherein the support plates include:
a first support plate (240a) disposed to correspond to the seventh surface of the first adhesive structure; and
a second support plate (240b) separated from the first support plate and disposed to correspond to the ninth surface of the second adhesive structure wherein a separate distance between the first support plate and the second support plate corresponds to the first distance.

## Patentansprüche

1. Elektronische Vorrichtung (101), die Folgendes umfasst:
ein faltbares Gehäuse (300), das Folgendes enthält:
eine Scharnierstruktur (500);
eine erste Gehäusestruktur (310), die mit der Scharnierstruktur gekoppelt ist und eine erste Mittelplatte (410) mit einer ersten Oberfläche (411), die in eine erste Richtung (P1) weist, und einer zweiten Oberfläche (412), die in eine zweite Richtung (P2) entgegengesetzt zu der ersten Richtung weist, und ein erstes Seitenelement (311) enthält, das mindestens einen Teil einer Seitenfläche der ersten Mittelplatte umgibt; und
eine zweite Gehäusestruktur (320), die mit der Scharnierstruktur gekoppelt ist, die eine zweite Mittelplatte (420) mit einer dritten Oberfläche (421), die in eine dritte Richtung (P3) weist, und einer vierten Oberfläche (422), die in eine vierte Richtung (P4) entgegengesetzt zu der dritten Richtung weist, und ein zweites Seitenelement (321) enthält, das mindestens einen Teil einer Seitenfläche der zweiten Mittelplatte umgibt und in Bezug auf die Scharnierstruktur an die erste Gehäusestruktur gefaltet ist, wobei die erste Oberfläche der dritten Oberfläche in einem gefalteten Zustand zugewandt ist und die dritte Richtung mit der ersten Richtung in einem entfalteten Zustand identisch ist;
ein flexibles Anzeigemodul (20), das sich von der ersten Oberfläche zu der dritten Oberfläche erstreckt und eine fünfte Oberfläche (22), die der ersten Oberfläche zugewandt ist, und eine sechste Oberfläche (23) enthält, die der dritten Oberfläche zugewandt ist;
eine erste Klebestruktur (700a), die zwischen der ersten Oberfläche und der fünften Oberfläche angeordnet ist und Folgendes enthält:
ein erstes Substrat (710), das eine siebte Oberfläche, die in die erste Richtung weist, und eine achte Oberfläche (712) enthält, die in die zweite Richtung weist;
eine erste Klebeschicht (730), die auf der siebten Oberfläche (711) angeordnet ist und ein erstes Muster enthält; und
eine zweite Klebeschicht (740), die auf der achten Oberfläche (712) angeordnet ist und ein zweites Muster enthält, das sich, wenn von oberhalb der siebten Oberfläche aus gesehen, zumindest teilweise nicht mit dem ersten Muster überlappt; und
eine zweite Klebestruktur (770b), die zwischen der dritten Oberfläche und der sechsten Oberfläche angeordnet ist und Folgendes enthält:
ein zweites Substrat (720), das eine neunte Oberfläche (721), die in die dritte Richtung weist, und eine zehnte Oberfläche (722) enthält, die in die vierte Richtung weist;
eine dritte Klebeschicht (750), die auf der neunten Oberfläche angeordnet ist und ein drittes Muster enthält; und
eine vierte Klebeschicht (760), die auf der zehnten Oberfläche (722) angeordnet ist und ein viertes Muster enthält, das sich, wenn von oberhalb der neunten Oberfläche aus gesehen, zumindest teilweise nicht mit dem dritten Muster überlappt,
**gekennzeichnet dadurch, dass**,
wenn die elektronische Vorrichtung in dem entfalteten Zustand ist:
- die erste Klebestruktur und die zweite Klebestruktur durch eine erste Distanz voneinander getrennt sind, und
- die erste Gehäusestruktur und die zweite Gehäusestruktur durch eine zweite Distanz voneinander getrennt sind, wobei die zweite Distanz größer als die erste Distanz ist.

2. Elektronische Vorrichtung nach Anspruch 1, wobei das erste Muster eine Vielzahl von ersten Patches (730a) enthält, die voneinander getrennt sind, und das zweite Muster eine Vielzahl von zweiten Patches (740a) enthält, die voneinander getrennt sind.

3. Elektronische Vorrichtung nach Anspruch 2, wobei die ersten Patches und die zweiten Patches kreisförmig sind.

4. Elektronische Vorrichtung nach Anspruch 2, wobei die Vielzahl von ersten Patches und die Vielzahl von zweiten Patches abwechselnd auf einer virtuellen geraden Linie angeordnet sind, die die erste Klebestruktur kreuzt.

5. Elektronische Vorrichtung nach Anspruch 2,
wobei die Vielzahl von ersten Patches und die Vielzahl von zweiten Patches zu Linien gleicher Dicke oder verschiedener Dicken geformt sind, und
wobei die ersten Patches in eine Richtung senkrecht zu der ersten Richtung voneinander beabstandet angeordnet sind und, wenn von oberhalb der siebten Oberfläche aus gesehen, die zweiten Patches parallel zu den ersten Patches voneinander beabstandet angeordnet sind.

6. Elektronische Vorrichtung nach Anspruch 3, wobei eine Trennungsdistanz zwischen benachbarten ersten Patches aus der Vielzahl von ersten Patches größer als ein Durchmesser eines zweiten Patches ist, der zwischen den benachbarten ersten Patches angeordnet ist, und eine Trennungsdistanz zwischen benachbarten zweiten Patches aus der Vielzahl von zweiten Patches größer als ein Durchmesser eines ersten Patches ist, der zwischen den benachbarten zweiten Patches angeordnet ist.

7. Elektronische Vorrichtung nach Anspruch 1, wobei das dritte Muster eine Vielzahl von dritten Patches (750a) enthält, die voneinander getrennt sind, und das vierte Muster eine Vielzahl von vierten Patches (760a) enthält, die voneinander getrennt sind.

8. Elektronische Vorrichtung nach Anspruch 7, wobei die dritten Patches und die vierten Patches kreisförmig sind.

9. Elektronische Vorrichtung nach Anspruch 8, wobei eine Trennungsdistanz zwischen benachbarten dritten Patches aus der Vielzahl von dritten Patches größer als ein Durchmesser eines vierten Patches ist, der zwischen den benachbarten dritten Patches angeordnet ist, und eine Trennungsdistanz zwischen benachbarten vierten Patches aus der Vielzahl von vierten Patches größer als ein Durchmesser eines dritten Patches ist, der zwischen den benachbarten vierten Patches angeordnet ist.

10. Elektronische Vorrichtung nach Anspruch 1, wobei, wenn von oberhalb der siebten Oberfläche aus gesehen, das erste Substrat einen ersten Pufferbereich enthält, in dem das erste Muster und das zweite Muster nicht angeordnet sind, und, wenn von oberhalb der neunten Oberfläche aus gesehen, das zweite Substrat einen zweiten Pufferbereich enthält, in dem das dritte Muster und das vierte Muster nicht angeordnet sind.

11. Elektronische Vorrichtung nach Anspruch 1, wobei das flexible Anzeigemodul Folgendes enthält:
eine transparente Frontplatte (21);
ein Display (200), das durch die Frontplatte freigelegt ist; und
eine Vielzahl von Trägerplatten (240), die auf einer Rückfläche des Displays angeordnet sind, um der fünften bzw. sechsten Oberfläche zu entsprechen.

12. Elektronische Vorrichtung nach Anspruch 11, wobei die Trägerplatten Folgendes enthalten:
eine erste Trägerplatte (240a), die angeordnet ist, um der siebten Oberfläche der ersten Klebestruktur zu entsprechen; und
eine zweite Trägerplatte (240b), die von der ersten Trägerplatte getrennt ist und angeordnet ist, um der neunten Oberfläche der zweiten Klebestruktur zu entsprechen, wobei eine separate Distanz zwischen der ersten Trägerplatte und der zweiten Trägerplatte der ersten Distanz entspricht.

## Revendications

1. Dispositif électronique (101) comprenant :
un logement pliable (300) incluant :
une structure de charnière (500) ;
une première structure de logement (310) couplée à la structure de charnière et incluant une première plaque médiane (410) incluant une première surface (411) orientée dans une première direction (P1) et une deuxième surface (412) orientée dans une deuxième direction (P2) opposée à la première direction, et un premier élément latéral (311) entourant au moins une partie d'une surface latérale de la première plaque médiane ; et
une deuxième structure de logement (320) couplée à la structure de charnière, incluant une deuxième plaque médiane (420) incluant une troisième surface (421) orientée dans une troisième direction (P3) et une quatrième surface (422) orientée dans une quatrième direction (P4) opposée à la troisième direction, et un deuxième élément latéral (321) entourant au moins une partie d'une surface latérale de la deuxième plaque médiane, et plié vers la première structure de logement par rapport à la structure de charnière, où la première surface fait face à la troisième surface dans un état plié, et la troisième direction est identique à la première direction dans un état déplié ;
un module d'écran flexible (20) s'étendant de la première surface à la troisième surface, et incluant une cinquième surface (22) faisant face à la première surface, et une sixième surface (23) faisant face à la troisième surface ;
une première structure adhésive (700a) disposée entre la première surface et la cinquième surface, et incluant :
un premier substrat (710) incluant une septième surface orientée dans la première direction et une huitième surface (712) orientée dans la deuxième direction ;
une première couche adhésive (730) disposée sur la septième surface (711) et incluant un premier modèle ; et
une deuxième couche adhésive (740) disposée sur la huitième surface (712) et incluant un deuxième modèle qui ne chevauche pas au moins partiellement le premier modèle, lorsque vu du dessus de la septième surface ; et
une deuxième structure adhésive (770b) disposée entre la troisième surface et la sixième surface, et incluant :
un deuxième substrat (720) incluant une neuvième surface (721) orientée dans la troisième direction et une dixième surface (722) orientée dans la quatrième direction ;
une troisième couche adhésive (750) disposée sur la neuvième surface et incluant un troisième modèle ; et
une quatrième couche adhésive (760) disposée sur la dixième surface (722) et incluant un quatrième modèle qui ne chevauche pas au moins partiellement le troisième modèle, lorsque vu du dessus de la neuvième surface,
**caractérisé en ce que**
lorsque le dispositif électronique est dans l'état déplié :
- la première structure adhésive et la deuxième structure adhésive sont séparées l'une de l'autre par une première distance, et
- la première structure de logement et la deuxième structure de logement sont séparées l'une de l'autre par une deuxième distance, où la deuxième distance est supérieure à la première distance.

2. Dispositif électronique selon la revendication 1, où le premier modèle inclut une pluralité de premiers patchs (730a) séparés les uns des autres, et le deuxième modèle inclut une pluralité de deuxièmes patchs (740a) séparés les uns des autres.

3. Dispositif électronique selon la revendication 2, où les premiers patchs et les deuxièmes patchs sont circulaires.

4. Dispositif électronique selon la revendication 2, où la pluralité de premiers patchs et la pluralité de deuxièmes patchs sont disposés alternativement les uns avec les autres sur une ligne droite virtuelle traversant la première structure adhésive.

5. Dispositif électronique selon la revendication 2,
où la pluralité de premiers patchs et la pluralité de deuxièmes patchs sont formés en lignes de même épaisseur ou d'épaisseurs différentes, et
où les premiers patchs sont disposés séparés les uns des autres dans une direction perpendiculaire à la première direction et, lorsque vus du dessus de la septième surface, les deuxièmes patchs sont disposés séparés les uns des autres parallèlement aux premiers patchs.

6. Dispositif électronique selon la revendication 3, où une distance de séparation entre des premiers patchs adjacents parmi la pluralité de premiers patchs est supérieure à un diamètre d'un deuxième patch situé entre les premiers patchs adjacents, et une distance de séparation entre des deuxièmes patchs adjacents parmi la pluralité de deuxièmes patchs est supérieure à un diamètre d'un premier patch situé entre les deuxièmes patchs adjacents.

7. Dispositif électronique selon la revendication 1, où le troisième modèle inclut une pluralité de troisièmes patchs (750a) séparés les uns des autres, et le quatrième modèle inclut une pluralité de quatrièmes patchs (760a) séparés les uns des autres.

8. Dispositif électronique selon la revendication 7, où les troisièmes patchs et les quatrièmes patchs sont circulaires.

9. Dispositif électronique selon la revendication 8, où une distance de séparation entre des troisièmes patchs adjacents parmi la pluralité de troisièmes patchs est supérieure à un diamètre d'un quatrième patch situé entre les troisièmes patchs adjacents, et une distance de séparation entre des quatrièmes patchs adjacents parmi la pluralité de quatrièmes patchs est supérieure à un diamètre d'un troisième patch situé entre les quatrièmes patchs adjacents.

10. Dispositif électronique selon la revendication 1, où, lorsque vu du dessus de la septième surface, le premier substrat inclut une première zone tampon dans laquelle le premier modèle et le deuxième modèle ne sont pas situés, et lorsque vu du dessus de la neuvième surface, le deuxième substrat inclut une deuxième zone tampon dans laquelle le troisième modèle et le quatrième modèle ne sont pas situés.

11. Dispositif électronique selon la revendication 1, où le module d'écran flexible inclut :
une plaque avant transparente (21) ;
un écran (200) exposé par la plaque avant ; et
une pluralité de plaques de support (240) disposées sur une surface arrière de l'écran pour correspondre aux cinquième et sixième surfaces, respectivement.

12. Dispositif électronique selon la revendication 11, où les plaques de support incluent :
une première plaque de support (240a) disposée pour correspondre à la septième surface de la première structure adhésive ; et
une deuxième plaque de support (240b) séparée de la première plaque de support et disposée pour correspondre à la neuvième surface de la deuxième structure adhésive où une distance séparée entre la première plaque de support et la deuxième plaque de support correspond à la première distance.
